# EUROPÄISCHE PATENTSCHRIFT

(11) **EP 2 379 377 B1**
(45) Veröffentlichungstag und Bekanntmachung des Hinweises auf die Patenterteilung: **09.10.2013**
(21) Anmeldenummer: 09751927.6
(22) Anmeldetag: 16.11.2009
(51) Int. Cl.: B60T 7/04, B60T 13/02

(54) **BETRIEB EINES BREMSKRAFTVERSTÄRKERS ALS PEDALSIMULATOR UND ENTSPRECHEND AUSGEBILDETER BREMSKRAFTVERSTÄRKER**
METHOD TO USE A BRAKING AMPLIFIER AS PEDAL SIMULATOR AND CORRESPONDING BRAKING AMPLIFIER
FONCTIONNEMENT D'UN SERVOFREIN EN TANT QUE SIMULATEUR DE PÉDALE, ET SERVOFREIN CONFIGURÉ DE MANIÈRE CORRESPONDANTE

(30) Priorität: 16.06.2009 DE 102009026966; 18.12.2008 DE 102008054849
(43) Veröffentlichungstag der Anmeldung: 26.10.2011
(73) Patentinhaber: Robert Bosch GmbH, 70442 Stuttgart (DE)
(72) Erfinder: WEIBERLE, Reinhard, 71665 Vaihingen/Enz (DE); JAHNZ, Timo, 74354 Besigheim (DE)
(86) Internationale Anmeldenummer: PCT/EP2009/065196
(87) Internationale Veröffentlichungsnummer: WO 2010/069688

(56) Entgegenhaltungen:
- WO-A1-2007/080106
- US-A1- 2003 168 909

## Beschreibung

Die Erfindung bezicht sich auf einen Bremskraftverstärker gemäß dem Oberbegriff vom Anspruch 1. Ein solcher Bremskraftverstärker ist aus WO 2007/080106 A bekannt. Die Erfindung bezicht sich auch auf ein Verfahren zum Betrieb eines solchen Bremskraftverstärkers.

### Stand der Technik

Ein elektromechanischer Bremskraftverstärkers ist aus der DE 102007016136 A1 bekannt. Dort wird zur Ermittlung einer von einem Fahrer aufgebrachten Pedalkraft eine Auswerte- und Steuereinheit verwendet, welche die aktuell wirkende Pedalkraft aus einer Differenz zwischen einer Gesamtbremskraft und einer zusätzlichen Bremskraft berechnet. Die Offeniegungsschrift US 2003/0168909 offenbart einen hydraulischen Bremskraftverstärker mit einem Bremsbetätigungselement und einem daran angekoppelten Simulatorkolben, wobei die Betätigungskraft über den Simulatorkolben und eine Simulatorkammer auf einen Eingangskolben übertragbar ist.

Pedalwegsimulatoren sind zum Beispiel aus der Schrift 'Kraftfahrtechnisches Taschenbuch' (25. Auflage, BOSCH, Vieweg Verlag ISBN 3528238763) bekannt. Bei einer elektrohydraulischen Bremse sind sie Teil einer Betätigungseinheit und ermöglichen es, einen geeigneten Kraft-Weg-Verlauf und eine angemessene Dämpfung des Bremspedals zu realisieren. Somit erhält der Fahrer beim Bremsen mit einer elektrohydraulischen Bremse das gleiche Bremsgefühl wie bei einem sehr gut ausgelegten konventionellen Bremssystem.

### Offenbarung der Erfindung

In der vorliegenden Erfindung wird ein Verfahren beschrieben, wie ein Bremskraftverstärker als Teil einer Bremsanlage als Pedalsimulator betrieben werden kann.

### Vorteile der Erfindung

Die Erfindung geht aus von einem Bremskraftverstärker bei einem Kraftfahrzeug, durch den eine durch einen Fahrer mittels eines Bremspedals aufgebrachte Kraft verstärkbar ist. Der Kern der Erfindung besteht darin, dass der Bremskraftverstärker derart ausgebildet ist, dass er eine auf das Bremspedal wirkende Gegenkrafterzeugen kann, die der durch den Fahrer aufgebrachten Kraft entgegengerichtet ist.

Aus dem Stand der Technik bekannte Bremspedalsimulatoren benötigen zur Einstellung einer das Pedalgefühl repräsentierenden Kraft-Weg-Charakteristik am Bremspedal zusätzliche Mittel, um eine der Fahrerbremskraft entgegenwirkende Gegenkraft zu erzeugen. Der Vorteil der vorliegenden Erfindung besteht darin, dass das Pedalgefühl, also speziell diese Kraft-Weg-Charakteristik, unter Ausnutzen eines zum Zweck der Bremskraftverstärkung bereits im Fahrzeug integrierten Bremskraftverstärkers eingestellt wird. So können beispielsweise Fahrzeuge mit Hybridbremssystemen elektromechanische Bremskraftverstärker aufweisen, ähnlich wie im Stand der Technik beschrieben. Ein solcher elektromechanischer Bremskraftverstärker wird im Rahmen der vorliegenden Erfindung als Pedalsimulator betrieben. Dadurch, dass gemäß der Erfindung das Bremspedalgefühl ohne zusätzliche Mittel im Fahrzeug durch den elektromechanischen Bremskraftverstärker erzeugt wird, können Kosten und Platzbedarf reduziert werden. Des weiteren kann der Bremskraftverstärker in einem weiteren Betriebsmodus auch zu seinem üblichen Zweck genutzt werden und eine eingehende, vom Fahrer aufgebrachte Bremskraft verstärken.

In der Erfindung ist vorgesehen, dass die Gegenkraft in Abhängigkeit der Bremspedalbetätigung einstellbar ist, wobei die Einstellung mittels eines Stellantriebs erfolgt. Dadurch wird vorteilhaferweise die Einstellung eines beliebigen Bremspedalgefühls ermöglicht.

Weiterhin ist in einer weiteren vorteilhaften Ausgestaltung der Erfindung vorgesehen, dass der Bremskraftverstärker eine mit dem Bremspedal verbundene Eingangsstange sowie ein elastisches Element aufweist. Bei dieser Ausführungsform wird die Gegenkraft durch eine durch Eindrücken erfolgte Deformation des elastischen Elements durch die dem Bremspedal abgewandte Seite der Eingangsstange aufgebracht. Zum Eindrücken des elastische Elements ist der Stellantrieb vorgesehen. Diese Ausgestaltung hat den Vorteil, dass durch Kenntnis der Elastizität des elastischen Elements die Kraftrückwirkung auf das Bremspedal durch eine einfache und damit kostengünstige Wegmessung (Auslenkungsgröße von der Eingangsstange zu dem elastischen Element) realisiert wird. Eine aufwändigere Messung der Pedalkraft ist somit nicht erforderlich.

In einer besonders vorteilhaften Ausgestaltung der Erfindung sind Verbindungsmittel zur Kopplung des Stellantriebs an das elastische Element vorgesehen. Durch die Verbindungsmittel ist diese Kopplung lösbar und/oder in der Wirkung beschränkt. Dadurch, dass die Verbindungsmittel nur eine begrenzte Kraft übertragen können, also die Kopplung in der Wirkung beschränkt ist, kann der erfindungsgemäße Bremskraftverstärker nur eine begrenzte Kraft gegen den Fahrer aufbringen. Werden die Verbindungsmittel mit einer größeren Kraft beaufschlagt, so bleibt die auf das Bremspedal wirkende Kraft gleich (Wirkung beschränkt) oder reduziert sich zu Null (Kopplung wird gelöst). Das hat den Vorteil, dass damit die Kraft, die gegen den Fahrer wirkt und damit eine Pedalbetätigung des Fahrers erschweren bzw. verhindern kann, auf einen vom Fahrer beherrschbaren Wert begrenzt wird. Zur erfindungsgemäßen Erzeugung der zur Bremskraft des Fahrers entgegen gerichteten Gegenkraft muss die Kopplung durch die Verbindungsmittel hergestellt sein.

In einer weiteren vorteilhaften Ausgestaltung der Erfindung wird abhängig von der Betätigung des Bremspedals, insbesondere abhängig von dem Bremspedalweg, entweder die vom Fahrer aufgebrachte Kraft verstärkt (Modus Bremskraftverstärker) oder die Gegenkraft erzeugt (Modus Pedalsimulator). Tritt der Fahrer das Bremspedal beispielsweise nur in einem begrenzten Maß, so wirkt der erfindungsgemäße Bremskraftverstärker als Pedalsimulator, das heißt, dass die Gegenkraft erzeugt wird. Die auf das Fahrzeug wirkende Bremskraft kann in diesem Fall beispielsweise durch rekuperatives Bremsen und/oder durch Erhöhung des Motorschleppmoments erzielt werden. Durch die erfindungsgemäße Gegenkraft hat der Fahrer auch in diesem Betriebsmodus ein gewohntes Pedalgefühl. Tritt der Fahrer das Bremspedal in größeren Ausmaß, so wirkt die normale Betriebsbremse auf das Fahrzeug, der erfindungsgemäße Bremskraftverstärker wirkt dann als Unterstützung zur Fahrerkraft.

### Beschreibung der Zeichnungen

Figur 1: Typisches Ausführungsbeispiel eines regelbaren elektromechanischen Bremskraftverstärkers im Betriebsmodus Pedalsimulator mit geschlossenem Koppelelement zwischen Verbindungsstück zum Hauptzylinder und dem Verstärkerkörper sowie einem elastischen Element zur Einstellung der Pedalcharakteristik.
Figur 2: Typisches Ausführungsbeispiel eines regelbaren elektromechanischen Bremskraftverstärkers im Betriebsmodus Bremskraftverstärker mit geschlossenem oder in der Wirkung beschränktem Koppelelement zwischen Verbindungsstück zum Hauptzylinder und dem Verstärkerkörper.

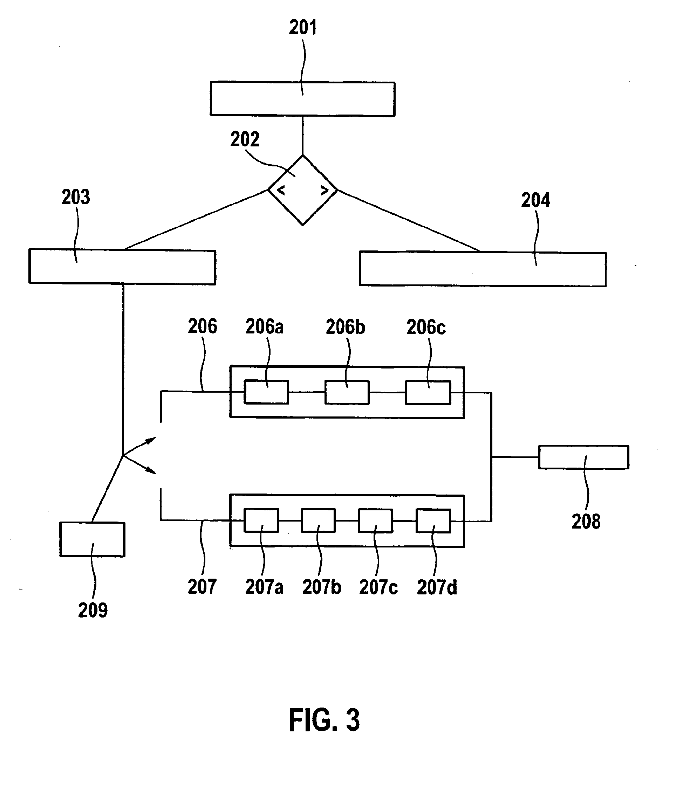

Figur 3: Schematische Darstellung des erfindungsgemäßen Verfahrens, anhand dessen der Bremskraftverstärker als Pedalsimulator betrieben werden kann.

### Ausführungsformen der Erfindung

Die Erfindung beschreibt einen elektromechanischen Bremskraftverstärker, sowie ein Verfahren zur Steuerung eines elektromechanischen Bremskraftverstärkers, um diesen als Pedalsimulator zu betreiben.
Das zu betreibende Bremssystem kann beispielhaft aus folgenden Komponenten bestehen.
- Regelbarer elektromechanischer Bremskraftverstärker
- Hauptbremszylinder
- Hydraulisches Bremssystem (konventionell, nicht eingezeichnet)
- Definierbarer Leerweg ds zwischen Verbindungsstück 103 des regelbaren Bremskraftverstärkers und dem Hauptbremszylinder 107
- Nachgeschaltetes / zusätzliches Fremdkraftsystem (nicht eingezeichnet)

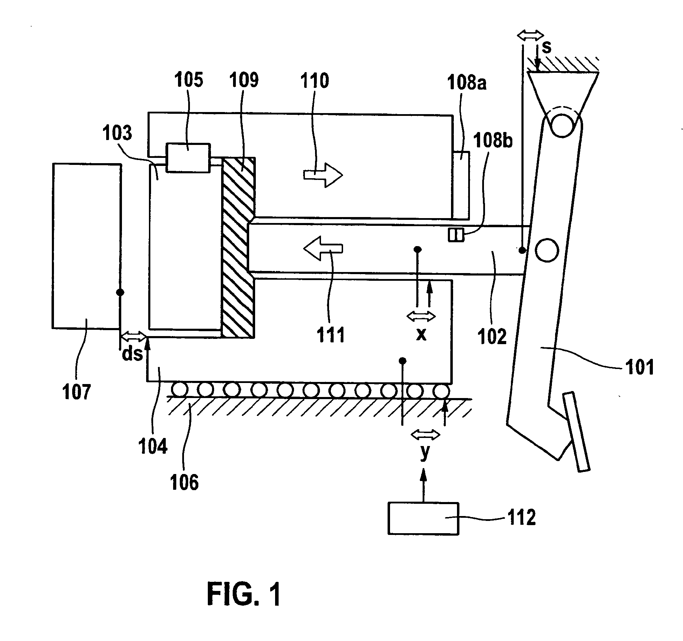

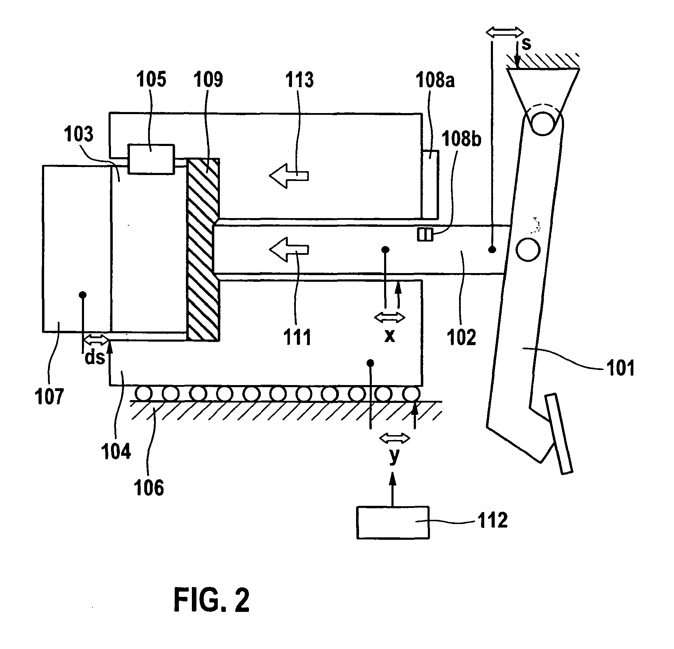

Ein aus diesen Komponenten bestehendes Bremssystem kann unter anderem in folgenden Betriebsmodi genutzt werden:
- Fremdkraftmodus (gemäß Figur 1): Bremsdruckaufbau durch Fremdkraft (ESP) oder Bremsverzögerung durch z.B. rekuperatives Bremssystem, Pedalgefühlgenerierung durch den Bremskraftverstärker, Verbindungsstück 103 und Hauptbremszylinder 107 sind räumlich getrennt. (Pedalweg s<ds)
- Bremskraftverstärkungsmodus (gemäß Figur 2): Standardbetrieb des regelbaren Bremskraftverstärkers. Bremsdruckaufbau durch Fahrerkraft 111 und Verstärkungskraft 113 durch regelbaren Bremskraftverstärker. Pedalgefühlgenerierung durch regelbaren Bremskraftverstärker in Kombination mit Reaktionskraft des Bremssystems. Ausgangsstange und Hauptzylinder in Kontakt. (Pedalweg s>ds)

Die vorliegende Erfindung bezieht sich in erster Linie auf den Fremdkraftmodus. In diesem Modus fungiert der Bremskraftverstärker rein als Pedalsimulator.
In Figur 1 ist eine Betätigungseinheit 101 mit einer Eingangsstange 102 verbunden und kann diese in Bezug auf einen Verstärkerkörper 104 eines Bremskraftverstärkers verschieben. Zwischen dem Verbindungsstück 103 zum Hauptzylinder 107 und der Eingangsstange 102 befindet sich ein elastisches Element 109, z.B. eine Reaktionsscheibe 109 mit einer bekannten Elastizität C_{RD} , die eine Verschiebung x entlang der gemeinsamen Achse der Eingangstange 102 und des Verstärkerkörpers 104 relativ zueinander zulässt und an dem Verbindungsstück 103 fixiert ist. Der Verstärkerkörper kann in Bezug auf das Gehäuse 106 des Bremskraftverstärkers z.B, durch einen Elektromotor (nicht eingezeichnet) um eine Größe y verschoben werden. Die Gesamtverschiebung s des Verbindungsstücks 103 in Bezug auf den Hauptzylinder 107 ergibt sich aus der Summe von x und y.
Die Relativauslenkung x von Eingangsstange 102 zu Verstärkerkörper 104 kann mittels eines Wegsensors 108a, 108b gemessen werden. Die Relativverschiebung y des Verstärkerkörpers 104 gegenüber dem Gehäuse 106 des Bremskraftverstärkers kann z.B. aus der Motorposition bestimmt werden.
Ist die Gesamtverschiebung s kleiner als der vorgegebene Leerweg ds, so besteht kein Kontakt zwischen Verbindungsstück 103 und Hauptzylinder 107, die gesamte Bremskraft wird durch Fremdkraft aufgebracht. Das Bremssystem befindet sich im Fremdkraftmodus und der Bremskraftverstärker fungiert als Pedalsimulator.

Für eine Pedalgefühlgenerierung mittels eines Pedalsimulators am Bremspedal 101 bedarf es einer der Betätigungskraft 111 des Fahrers entgegen gerichteten Kraft 110 welche im Fremdkraftmodus durch den regelbaren Bremskraftverstärker aufgebracht werden soll. Zu diesem Zweck kann ein Koppelelement 105 das Verbindungsstück 103 zum Hauptzylinder 107 und den Verstärkerkörper 104 miteinander verbinden.

Das Koppelelement 105 kann unterschiedlich ausgestaltet sein, als ein Beispiel sei eine Kombination aus einem Permanentmagnet und einem Elektromagnet angeführt. Als weitere Ausführung kann das Koppelelement ein magneto-rheologischer Dämpfer sein. In dieser Ausführungsform besteht der Dämpfer aus einer Kolben-Zylinder Einheit, wobei eine Komponente dieser Einheit mit dem Verstärkerltörper verbunden ist, die andere zum Beispiel mit dem Verbindungsstück. Die beiden durch den Kolben getrennten Kammern des Zylinders weisen eine Verbindung auf, zusätzlich kann die Viskosität der Flüssigkeit und somit das Dämpfungsverhalten des Dämpfers über eine elektrische Ansteuerung eingestellt werden.
In einer weiteren Ausführungsform kann zusätzlich die Verbindung zwischen den zwei Kammern des Zylinders als steuerbares Ventil ausgestaltet sein, mit Hilfe dessen die Dämpfung (bis hin zur Verriegelung) eingestellt werden kann.
In einer weiteren Ausführungsform umfasst der das Koppelement ebenfalls eine Kolben-Zylinder Einheit und ein elektrisches ansteuerbares Ventil, allerdings weist der Zylinder nur eine Arbeitskammer auf. Als Flüssigkeit wird Bremsflüssigkeit aus einem Bremsflüssigkeitsvorratsbehälter verwendet.
Das elektrisch ansteuerbare Ventil führt je nach Schaltung dazu, dass Volumen mit dem Bremsflüssigkeitsvorratsbehälter ausgetauscht wird und keine Kopplung besteht, oder dass Volumen in der Arbeitskammer der Kolben-Zylinder-Einheit eingesperrt wird und somit Kopplung besteht. Selbstverständlich sind weitere Kopplungsmöglichkeiten denkbar.
Das Koppelelement 105 kann dermaßen ausgelegt sein, dass die maximale aufbietbare Kraft auf einen vorab definierten Wert beschränkt ist, um dem Fahrer ein Überdrücken dieser Kopplung zu ermöglichen.
Bei geschlossener Kopplung zwischen Verstärkerkörper 104 und Verbindungsstück 103 kann durch eine Verschiebung des Verstärkerkörpers 104 das mit dem Verbindungsstück 103 verbundene elastische Element 109 parallel zur Eingangsstange 102 auf diese zu und/oder von dieser weg verschoben werden.

Bei einer solchen Bewegung wird bei Kontakt zwischen elastischem Element 109 und dem vom Bremspedal abgewandten Ende der Eingangsstange das elastische Element 109 verformt und überträgt eine Gegenkraft auf die Eingangsstange 102, welche von der Deformation des elastischen Elements und somit von der relativen Verschiebung x abhängt.
So kann z.B. eine vorhandene Deformation des elastischen Elements 109 durch die Eingangsstange 102 und eine daraus resultierende Gegenkraft je nach Bedarf verstärkt oder abgeschwächt werden.
Dieses Prinzip nutzt man in der vorliegenden Erfindung aus, um die Gegenkraft je nach absoluter Position der Eingangsstange zu variieren.

Ein Pedalsimulator dient zur Ermittlung der im Fahrzeug einzustellenden Bremskraft sowie zur Vermittlung des Pedalgefühls an den Fahrer. Um dies zu gewährleisten, wird häufig ein Kraftsensor zur Bestimmung der vom Fahrer ausgeübten Pedalbetätigungskraft oder eine weitere die Pedalbetätigungskraft repräsentierende Messvorrichtung an der Pedalstange verwendet.

In dem die Erfindung kennzeichnenden Verfahren wird die Regelung des Pedalsimulators mit Hilfe von im Bremskraftverstärker vorhandenen Elementen direkt bewerkstelligt.

Das Verfahren besteht aus folgenden Schritten:
In einem ersten Verfahrensschritt 201 wird ein Pedalweg s der Eingangstange 102 ermittelt. Der Pedalweg kann direkt durch einen in den Figuren 1 und 2 nicht dargestellten Wegsensor gemessen werden oder indirekt durch die Beziehung s=x+y (x mit Sensor 108, Ermittlung der Motorposition y ist nicht in Figur 1 und 2 dargestellt).

In einem weiteren Verfahrensschritt 202 wird entschieden, ob die Eingangsstange 102 einen Pedalweg s<ds oder einen Pedalweg s>ds bei Betätigung des Bremspedals zurückgelegt hat. Anhand dessen wird entschieden, ob der Bremskraftverstärker im Bremskraftverstärkungsmodus 204 (Pedalweg s>ds) oder als Pedalsimulator 203 (Pedalweg s<ds) betrieben wird.

Klar ist, dass die Entscheidung 202 in Bezug auf den Betriebsmodus nicht zwangsläufig anhand des Pedalwegs s getroffen werden muss. Genauso denkbar ist z.B. ein Grenzwert für die Änderung des Pedalwegs mit der Zeit. Wird der Bremskraftverstärker als Pedalsimulator 203 betrieben, so kann das Verfahren in der dargestellten Ausführungsform in einem von zwei möglichen Betriebsarten 206 oder 207 fortgeführt werden.

Die Anwendung der Verfahrensschritte 206 und 207 hängt von der Betriebssituation des Bremskraftverstärkers ab. Wird die Bremse von der Ausgangsposition des Bremspedals bzw. vom Fahrzeugzustand "ungebremst" aus betätigt, dann ist Betriebsart 206 die passende. Ist das Fahrzeug bereits (hydraulisch) gebremst, d.h. erfolgt eine Umschaltung des Bremskraftverstärkers vom Bremskraftverstärkungsmodus zum Betriebsmodus "Pedalsimulator" im bereits betätigten Zustand, dann ist die Betriebsart 207 die passende.

Die Entscheidung bezüglich der geschilderten Betriebssituation und somit für den Fortgang des Verfahrens über 206 oder 207 wird in einer Modusauswahl durch eine Entscheidungseinheit 209 getroffen.

In der ersten Betriebsart 206 wird als Ausgangspunkt die aktuelle bzw. zur Zeit vorliegende relative Auslenkung x bestimmt. Das Verfahren läuft über folgende Schritte ab:
- Schritt 206a: Ermittlung von Relativauslenkung x anhand von Sensor 108
- Schritt 206b: Berechnung einer einzustellenden Motorposition y anhand einer Kennlinie.
- Schritt 206c: Einstellen dieser Motorposition y durch entsprechende Betätigung des Stellantriebs 112.

In der zweiten Betriebsart 207 hat der Fahrer das Pedal bereits betätigt und der Motor 112 befindet sich bei der Position y. Dann wird eine der Position y entsprechende Gegenkraft eingestellt.

Das Verfahren läuft über folgende Schritte ab:
- Schritt 207a: Ermitteln der Auslenkung y durch nicht dargestellten Positionssensor.
- Schritt 207b: Ermitteln des Sollwerts der einzustellenden Pedalgegenkraft 110 aus einer Kennlinie
- Schritt 207c: Bestimmung eines Sollwerts für die der ermittelten Gegenkraft entsprechende Relativauslenkung x mit Kenntnis der Elastizität C_{RD} der Reaktionsscheibe.
- Schritt 207d: Einstellen dieses Sollwertes für die Relativauslenkung x

Für beide Ausführungsmöglichkeiten des Verfahrens 206 und 207 ergibt sich als Endzustand 208 eine der Betätigungskraft des Fahrers entgegen gerichtete Gegenkraft. Diese Gegenkraft ist durch die Kennlinien 206b und 207b einstellbar.

Zu betonen ist, dass die Steuerung des elektromechanischen Bremskraftverstärkers , genauso wie die Entscheidung 202 auch über andere wegabhängige Größen erfolgen kann.

Zusammenfassend kann gesagt werden, dass die Erfindung einen steuerbaren elektromechanischen Bremskraftverstärker beschreibt sowie ein Verfahren zum Betrieb desselben, der mittels eines Koppelelements zwischen Bremskraftverstärker und Pedalstange in der Lage ist eine Kraft entgegengesetzt der Pedalbetätigungskraft eines Fahrers auszuüben und somit als Pedalsimulator betrieben werden kann. Dazu kann eine Pedalgegenkraft in Abhängigkeit einer vom Fahrer vorgegebenen Pedalposition mittels einer Kennlinie eingestellt werden und dem Fahrer ein Pedalgefühl vermitteln, selbst wenn keine Rückwirkung z.B. eines konventionellen Bremssystems vorliegt. In einem weiteren Betriebsmodus kann der Bremskraftverstärker in seiner ursprünglichen Form betrieben werden.

## Patentansprüche

1. Bremskraftverstärker bei einem Kraftfahrzeug, durch den eine durch einen Fahrer mittels eines Bremspedals (101) aufgebrachte Kraft verstärkbar ist, wobei der Bremskraftverstärker derart ausgebildet ist, dass er eine auf das Bremspedal (101) wirkende Gegenkraft erzeugen kann, die der durch den Fahrer aufgebrachten Kraft entgegengerichtet ist, **dadurch gekennzeichnet, dass** die Gegenkraft in Abhängigkeit der Bremspedalbetätigung (s) einstellbar ist, wobei die Einstellung mittels eines Stellantriebs (112) des Bremskraftverstärkers erfolgt.

2. Bremskraftverstärker nach Anspruch 1, **dadurch gekennzeichnet, dass** der Bremskraftverstärker eine mit dem Bremspedal (101) verbundene Eingangsstange (102) sowie ein elastisches Element (109) aufweist, welches mit dem Stellantrieb verbunden ist, und die Gegenkraft durch eine durch Eindrücken erfolgte Deformation des elastischen Elements (109) durch die dem Bremspedal (101) abgewandte Seite der Eingangsstange (102) aufgebracht wird, wobei das mit dem Stellantrieb (112) verbundene elastische Element (109) verschiebbar ist und das Eindrücken durch eine Betätigung des Stellantriebs (112) erfolgt bzw. ermöglicht wird.

3. Bremskraftverstärker nach Anspruch 2, **dadurch gekennzeichnet, dass** der Bremskraftverstärker Mittel zur Bestimmung (108a,b) einer die relative Auslenkung der Eingangsstange (102) gegenüber dem elastischen Element (109) repräsentierenden Auslenkungsgröße (x) aufweist und dass der Betrag der Gegenkraft mittels des Stellantriebs (112) durch eine Einstellung der Auslenkungsgröße (x) von Eingangsstange (102) zu dem elastischen Element, eingestellt wird.

4. Bremskraftverstärker nach Anspruch 3, **dadurch gekennzeichnet dass** die Einstellung der Auslenkungsgröße (x) derart geschieht, dass:
- die Position (y) des Stellantriebs (112) abhängig von der durch die Bremspedalbetätigung induzierten relativen Auslenkung der Eingangsstange (102) gegenüber dem elastischen Element (109) eingestellt wird,
oder
- die Auslenkungsgröße (x) abhängig von der Position (y) des Stellantriebs (112) eingestellt wird.

5. Bremskraftverstärker nach Anspruch 2, **dadurch gekennzeichnet dass** Verbindungsmittel (105) vorgesehen sind, mittels derer der Stellantrieb (112) mit dem elastischen Element (109) gekoppelt ist, wobei vorgesehen ist, dass die Kopplung lösbar und/oder in der Wirkung beschränkt ist.

6. Bremskraftverstärker nach Anspruch 5, **dadurch gekennzeichnet dass** die Verbindungsmittel (105) derart vorgesehen sind, dass
- die Kopplung zwischen dem Stellantrieb (112) und dem elastischen Element (109) abhängig von der Bremspedalbetätigung, insbesondere abhängig von der Bremspedalkraft, lösbar ist und/oder
- die Kopplung zwischen dem Stellantrieb (112) und dem elastischen Element (109) zur Erzeugung der Gegenkraft geschlossen ist.

7. Bremskraftverstärker nach Anspruch 1, **dadurch gekennzeichnet, dass** abhängig von der Betätigung des Bremspedals, insbesondere abhängig von dem Bremspedalweg, entweder die vom Fahrer aufgebrachte Kraft (111) verstärkt wird (113) oder die Gegenkraft (110) erzeugt wird.

8. Bremskraftverstärker nach Anspruch 1, **dadurch gekennzeichnet, dass**
- das Bremspedal (101) an ein Eingangselement (102) gekoppelt ist, wobei das Eingangselement (102) ein Verstärkerkörper (104) zueinander um eine Strecke (x) beweglich verbunden sind, wobei der Verstärkerkörper (104) durch einen Stellantrieb (112) um eine Strecke (y) relativ zu einem wenigstens das Eingangselement (102) und den Verstärkerkörper beinhaltenden Gehäuse des Bremskraftverstärkers (106) verschoben werden kann,
- wobei an dem Eingangselement eine Sensorik (108,a,b) vorgesehen ist um eine relative Auslenkung (x) von Verstärkerkörper (104) relativ zur Eingangsstange (102) zu detektieren,
- wobei ein Verbindungsstück (103) und der Verstärkerkörper (104) zueinander beweglich sind, wobei das Verbindungsstück lösbar mit dem Verstärkerkörper (104) über ein Verbindungsmittel (105) verbunden werden kann, und wobei das Verbindungsstück (103) an der dem Bremspedal zugewandten Seite mit einem elastischen Element (109) verbunden ist,
- wobei zwischen dem Verbindungsstück (103) und dem Hauptbremszylinder (107) ein Leerweg (ds) vorgesehen ist

9. Verfahren zum Betrieb eines Bremskraftverstärkers bei einem Kraftfahrzeug, durch den eine durch einen Fahrer mittels eines Bremspedals (101) aufgebrachte Kraft verstärkbar ist, wobei mittels des Bremskraftverstärkers eine auf das Bremspedal (101) wirkende Gegenkraft erzeugt wird, die der durch den Fahrer aufgebrachten Kraft entgegengerichtet ist, **dadurch gekennzeichnet, dass** die Gegenkraft in Abhängigkeit der Bremspedalbetätigung (s) einstellbar ist, wobei die Einstellung mittels eines Stellantriebs (112) des Bremskraftverstärkers erfolgt

10. Verfahren nach Anspruch 9, **dadurch gekennzeichnet, dass** der Bremskraftverstärker eine mit dem Bremspedal (101) verbundene Eingangsstange (102) sowie ein elastisches Element (109) aufweist und die Gegenkraft durch eine durch Eindrücken erfolgte Deformation des elastischen Elements (109) durch die dem Bremspedal (101) abgewandte Seite der Eingangsstange (102) aufgebracht wird, wobei ein Stellantrieb (112) vorgesehen ist, mittels dem das mit dem Stellantrieb (112) verbundene elastische Element (109) verschiebbar ist und das Eindrücken durch eine Betätigung des Stellantriebs (112) erfolgt bzw. ermöglicht wird.

11. Verfahren nach Anspruch 10, **dadurch gekennzeichnet, dass** eine die relative Auslenkung der Eingangsstange (102) gegenüber dem elastischen Element (109) repräsentierende Auslenkungsgröße (x) bestimmt wird und der Betrag der Gegenkraft durch eine Einstellung der Auslenkungsgröße (x) von Eingangsstange (102) zu dem elastischen Element durch Betätigung eines Stellantriebs (112) eingestellt wird.

12. Verfahren nach Anspruch 11, **dadurch gekennzeichnet dass** die Einstellung der Auslenkungsgräße (x) derart geschieht, dass:
- die Position (y) des Stellantriebs (112) abhängig von der durch die Bremspedalbetätigung induzierten relativen Auslenkung der Eingangsstange (102) gegenüber dem elastischen Element (109) eingestellt wird.
oder
- die Auslenkungsgröße (x) abhängig von der Position (y) des Stellantriebs (112) eingestellt wird.

13. Verfahren nach Anspruch 9, **dadurch gekennzeichnet, dass** abhängig von der Betätigung des Bremspedals, insbesondere abhängig von dem Bremspedalweg, entweder die vom Fahrer aufgebrachte Kraft (111) verstärkt wird (113) oder die Gegenkraft (110) erzeugt wird.

## Claims

1. Brake booster in a motor vehicle, by means of which a force which is applied by a driver by means of a brake pedal (101) can be amplified, wherein the brake booster is designed in such a way that said brake booster can generate an opposing force which acts on the brake pedal (101) and which is directed counter to the force applied by the driver, **characterized in that** the opposing force can be set as a function of the activation (s) of the brake pedal, wherein the setting is made by means of an actuator drive (112) of the brake booster.

2. Brake booster according to Claim 1, **characterized in that** the brake booster has an input rod (102) which is connected to the brake pedal (101), and an elastic element (109) which is connected to the actuator drive, and the opposing force is applied by deformation of the elastic element (109) which has been carried out by pressing in, by means of the side of the input rod (102) which faces away from the brake pedal (101), wherein the elastic element (109) which is connected to the actuator drive (112) can be displaced, and the pressing in is carried out or is made possible by activating the actuator drive (112).

3. Brake booster according to Claim 2, **characterized in that** the brake booster has means for determining (108a,b) a deflection variable (x) which represents the relative deflection of the input rod (102) with respect to the elastic element (109), and **in that** the absolute value of the opposing force is set by means of the actuator drive (112) by adjusting the deflection variable (x) of the input rod (102) with respect to the elastic element.

4. Brake booster according to Claim 3, **characterized in that** the setting of the deflection variable (x) is carried out in such a way that:
- the position (y) of the actuator drive (112) is set as a function of the relative deflection, induced by the activation of the brake pedal, of the input rod (102) with respect to the elastic element (109),
or
- the deflection variable (x) is set as a function of the position (y) of the actuator drive (112).

5. Brake booster according to Claim 2, **characterized in that** connecting means (105) are provided, by means of which the actuator drive (112) is coupled to the elastic element (109), wherein there is provision that the coupling can be released and/or is limited in effect.

6. Brake booster according to Claim 5, **characterized in that** the connecting means (105) are provided in such a way that
- the coupling between the actuator drive (112) and the elastic element (109) can be released as a function of the activation of the brake pedal, in particular as a function of the brake pedal force, and/or
- the coupling between the actuator drive (112) and the elastic element (109) is closed in order to generate the opposing force.

7. Brake booster according to Claim 1, **characterized in that**, depending on the activation of the brake pedal, in particular depending on the brake pedal travel, either the force (111) which is applied by the driver is boosted (113) or the opposing force (110) is generated.

8. Brake booster according to Claim 1, **characterized in that**
- the brake pedal (101) is coupled to an input element (102), wherein the input element (102) and a booster body (104) are connected so as to be movable with respect to one another by a distance (x), wherein the booster body (104) can be displaced by an actuator drive (112) by a distance (y) relative to a housing of the brake booster (106) which contains at least the input element (102) and the booster body,
- wherein a sensor system (108,a,b) is provided on the input element in order to detect a relative deflection (x) of the booster body (104) relative to the input rod (102),
- wherein a connecting element (103) and the booster body (104) are movable with respect to one another, wherein the connection element can be releasably connected to the booster body (104) via a connecting means (105), and wherein the connecting element (103) is connected, on the side facing the brake pedal, to an elastic element (109),
- wherein idle travel (ds) is provided between the connecting element (103) and the main brake cylinder (107).

9. Method for operating a brake booster in a motor vehicle, by means of which a force which is applied by a driver by means of a brake pedal (101) can be boosted, wherein an opposing force which acts on the brake pedal (101) and which opposes the force applied by the driver is generated by means of the brake booster, **characterized in that** the opposing force can be set as a function of the actuation of the brake pedal (s), wherein the setting is carried out by means of an actuator drive (112) of the brake booster.

10. Method according to Claim 9, **characterized in that** the brake booster has an input rod (102) which is connected to the brake pedal (101), and an elastic element (109), and the opposing force is applied by deformation of the elastic element (109), which has been carried out by pressing in, by means of the side of the input rod (102) facing away from the brake pedal (101), wherein an actuator drive (112) is provided by means of which the elastic element (109) which is connected to the actuator drive (112) can be displaced, and the pressing in is carried out or is made possible by activating the actuator drive (112).

11. Method according to Claim 10, **characterized in that** a deflection variable (x) which represents the relative deflection of the input rod (102) with respect to the elastic element (109) is determined, and the absolute value of the opposing force is set by setting the deflection variable (x) of the input rod (102) with respect to the elastic element by activating an actuator drive (112).

12. Method according to Claim 11, **characterized in that** the setting of the deflection variable (x) is carried out in such a way that:
- the position (y) of the actuator drive (112) is set as a function of the relative deflection, induced by the activation of the brake pedal, of the input rod (102) with respect to the elastic element (109),
or
- the deflection variable (x) is set as a function of the position (y) of the actuator drive (112).

13. Method according to Claim 9, **characterized in that**, depending on the activation of the brake pedal, in particular depending on the brake pedal travel, either the force (111) which is applied by the driver is boosted (113) or the opposing force (110) is generated.

## Revendications

1. Amplificateur de force de freinage pour véhicule automobile, par lequel une force appliquée par le conducteur au moyen d'une pédale de frein (101) peut être renforcée, l'amplificateur de force de freinage étant configuré de manière à pouvoir former une force de réaction qui agit sur la pédale de frein (101) et qui est orientée dans la direction opposée à la force appliquée par le conducteur,
**caractérisé en ce que**
la force de réaction peut être réglée en fonction de l'actionnement (s) de la pédale de frein, le réglage s'effectuant au moyen d'un entraînement de réglage (112) de l'amplificateur de force de freinage.

2. Amplificateur de force de freinage selon la revendication 1, **caractérisé en ce que** l'amplificateur de force de freinage présente une tringle d'entrée (102) reliée à la pédale de frein (101) ainsi qu'un élément élastique (109) relié à l'entraînement de réglage, la force de réaction étant appliquée sur le côté de la tringle d'entrée (102) non tourné vers la pédale de frein (101) par la déformation de l'élément élastique (109) résultant de l'enfoncement, l'élément élastique (109) relié à l'entraînement de réglage (112) pouvant coulisser et l'enfoncement ayant lieu ou étant permis par actionnement de l'entraînement de réglage (112).

3. Amplificateur de force de freinage selon la revendication 2, **caractérisé en ce que** l'amplificateur de force de freinage présente des moyens (108a, b) de détermination d'une grandeur de déplacement (x) qui représente le déplacement de la tringle d'entrée (102) par rapport à l'élément élastique (109) et **en ce que** le niveau de la force de réaction est réglé au moyen de l'entraînement de réglage (112), par réglage de la grandeur de déplacement (x) de la tringle d'entrée (102) par rapport à l'élément élastique.

4. Amplificateur de force de freinage selon la revendication 3, **caractérisé en ce que** le réglage de la grandeur de déplacement (x) est réalisé de telle sorte que la position (y) de l'entraînement de réglage (112) est réglée en fonction du déplacement de la tringle d'entrée (102) par rapport à l'élément élastique (109) induit par l'actionnement de la pédale de frein ou **en ce que** la grandeur de déplacement (x) est réglée en fonction de la position (y) de l'entraînement de réglage (112).

5. Amplificateur de force de freinage selon la revendication 2, **caractérisé en ce que** des moyens de liaison (105) au moyen desquels l'entraînement de réglage (112) est accouplé à l'élément élastique (109) sont prévus, l'accouplement étant libérable et/ou ayant un effet limité.

6. Amplificateur de force de freinage selon la revendication 5, **caractérisé en ce que** les moyens de liaison (105) sont prévus de telle sorte que l'accouplement entre l'entraînement de réglage (112) et l'élément élastique (109) peut être libéré en fonction de l'actionnement de la pédale de frein et en particulier en fonction de la force agissant sur la pédale de frein et/ou **en ce que** l'accouplement entre l'entraînement de réglage (112) et l'élément élastique (109) est fermé pour former la force de réaction.

7. Amplificateur de force de freinage selon la revendication 1, **caractérisé en ce que** la force (111) appliquée par le conducteur est amplifiée (113) ou **en ce que** la force d'opposition (110) est formée en fonction de l'actionnement de la pédale de frein et en particulier en fonction de la course de la pédale de frein.

8. Amplificateur de force de freinage selon la revendication 1, **caractérisé en ce que** la pédale de frein (101) est accouplée à un élément d'entrée (102), l'élément d'entrée (102) et un corps d'amplificateur (104) étant reliés l'un à l'autre de manière à pouvoir se déplacer sur un parcours (x), le corps d'amplificateur (104) pouvant être déplacé par un entraînement de réglage (112) sur un parcours (y) par rapport à un boîtier de l'amplificateur (106) de force de freinage qui contient au moins l'élément d'entrée (102) et le corps d'amplificateur, un ensemble (108a, b) de capteurs étant prévu sur l'élément d'entrée pour détecter un déplacement (x) du corps d'amplificateur (104) par rapport à la tringle d'entrée (102), une pièce de liaison (103) et le corps d'amplificateur (104) pouvant se déplacer l'un par rapport à l'autre, la pièce de liaison pouvant être reliée de manière libérable au corps d'amplificateur (104) par l'intermédiaire d'un moyen de liaison (105), la pièce de liaison (103) étant raccordée à un élément élastique (109) sur le côté tourné vers la pédale de frein, un parcours à vide (ds) étant prévu entre la pièce de liaison (103) et le cylindre principal de frein (107).

9. Procédé de conduite d'un amplificateur de force de freinage pour véhicule automobile, par lequel une force appliquée par le conducteur au moyen d'une pédale de frein (101) peut être renforcée, une force de réaction agissant sur la pédale de frein (101) étant formée au moyen de l'amplificateur de force de freinage et étant orientée dans la direction opposée à la force appliquée par le conducteur,
**caractérisé en ce que**
la force de réaction peut être réglée en fonction de l'actionnement (s) de la pédale de frein, le réglage s'effectuant au moyen d'un entraînement de réglage (112) de l'amplificateur de force de freinage.

10. Procédé selon la revendication 9, **caractérisé en ce que** l'amplificateur de force de freinage présente une tringle d'entrée (102) reliée à la pédale de frein (101) ainsi qu'un élément élastique (109) et **en ce que** la force de réaction est appliquée sur le côté de la tringle d'entrée (102) non tourné vers la pédale de frein (101) par la déformation de l'élément élastique (109) résultant de l'enfoncement, un entraînement de réglage (112) au moyen duquel l'élément élastique (109) raccordé à l'entraînement de réglage (112) peut être déplacé étant prévu et l'enfoncement s'effectuant par un actionnement de l'entraînement de réglage (112) ou étant permis par ce dernier.

11. Procédé selon la revendication 10, **caractérisé en ce qu'**une grandeur de déplacement (x) qui représente le déplacement de la tringle d'entrée (102) par rapport à l'élément élastique (109) est déterminée et **en ce que** le niveau de la force de réaction est réglé au moyen de l'entraînement de réglage (112), par réglage de la grandeur de déplacement (x) de la tringle d'entrée (102) par rapport à l'élément élastique.

12. Procédé selon la revendication 11, **caractérisé en ce que** le réglage de la grandeur de déplacement (x) est réalisé de telle sorte que la position (y) de l'entraînement de réglage (112) est réglée en fonction du déplacement de la tringle d'entrée (102) par rapport à l'élément élastique (109) induit par l'actionnement de la pédale de frein ou **en ce que** la grandeur de déplacement (x) est réglée en fonction de la position (y) de l'entraînement de réglage (112).

13. Procédé selon la revendication 9, **caractérisé en ce que** la force (111) appliquée par le conducteur est amplifiée (113) ou **en ce que** la force d'opposition (110) est formée en fonction de l'actionnement de la pédale de frein et en particulier en fonction de la course de la pédale de frein.
